**Europäisches Patentamt**

**European Patent Office**

**Office européen des brevets**

(19)

(11) Veröffentlichungsnummer: **0 183 937**
**B1**

(12) **EUROPÄISCHE PATENTSCHRIFT**

(45) Veröffentlichungstag der Patentschrift:
**01.06.88**

(21) Anmeldenummer: **85112274.7**

(22) Anmeldetag: **27.09.85**

(51) Int. Cl.⁴: **B 01 D 46/10, B 60 H 3/06**

(54) Vorrichtung zum Filtern eines Zuluftstroms, insbesondere für Kraftfahrzeuge.

(30) Priorität: **04.12.84 DE 3444126**

(43) Veröffentlichungstag der Anmeldung:
**11.06.86 Patentblatt 86/24**

(45) Bekanntmachung des Hinweises auf die Patenterteilung:
**01.06.88 Patentblatt 88/22**

(84) Benannte Vertragsstaaten:
**DE FR GB IT SE**

(56) Entgegenhaltungen:
**EP - A - 0 075 054**
**DE - A - 3 330 950**

(73) Patentinhaber: **Süddeutsche Kühlerfabrik Julius Fr. Behr GmbH & Co. KG, Mauserstrasse 3,
D-7000 Stuttgart 30 (DE)**

(72) Erfinder: **Dietzsch, Kurt, Dipl.-Ing. (FH), Göppinger Strasse 65, D-7250 Leonberg-Eltingen (DE)**
Erfinder: **Oess, Hans Dieter, Glaserweg 11,
D-7000 Stuttgart 31 (DE)**

(74) Vertreter: **Dauster, Hanjörg, Dipl.-Ing. et al, WILHELM & DAUSTER Patentanwälte Hospitalstrasse 8,
D-7000 Stuttgart 1 (DE)**

## Beschreibung

Die Erfindung betrifft eine Vorrichtung zum Filtern eines Zuluftstromes, insbesondere für Kraftfahrzeuge, die einen in einem Gehäuse angeordneten, aus dem Zuluftstrom herausschwenkbaren Filter enthält.

Bei Vorrichtungen der eingangs genannten Art, wird der Filter aus dem Zuluftstrom herausgeschwenkt, wenn grosse Luftmengen für den Fahrgastinnenraum benötigt werden. Da der Filter auch gegen den Zuluftstrom verschwenkt werden muss, ergeben sich relativ hohe Betätigungskräfte. Ausserdem muss ein relativ grosser Bauraum zur Verfügung gestellt werden um den Filter aus dem Zuluftstrom herausschwenken zu können. Da dieser Bauraum in vielen Fällen aus Platzgründen in Kraftfahrzeugen nicht zur Verfügung steht, muss bei praktischen Lösungen dieser Art auf ein ansonsten mögliches Filtervolumen verzichtet werden.

Es ist auch bekannt, den Filter bei Bedarf über eine Bypassleitung zu umgehen, die von einer Klappe gesteuert wird. Auch hierbei ist ein relativ grosser Raumbedarf vorhanden, so dass sich auch eine derartige Lösung bei den normalerweise beengten Platzverhältnissen in Kraftfahrzeugen nur unter Verzicht auf Filtervolumen verwirklichen lässt.

Auch ist eine Anordnung eines Feuchtigkeits- und/oder- Teilchenabscheiders für die Luftansaugung von Gasturbinen für Schiffsantriebe bekannt (EP-A-075 054), bei welcher ein eine rechteckige Grundfläche aufweisender Abscheider als ganzes um eine Querachse aus der Arbeitstellung heraus zu einer Bypassstellung verschwenkbar ist.

Der Erfindung liegt die Aufgabe zugrunde, eine Vorrichtung der eingangs genannten Art so auszubilden, dass ein maximales Filtervolumen erzielbar ist, dass für den Durchtritt grosser Luftmengen ein freier Luftdurchlass geschaffen werden kann, und dass dennoch ein möglichst geringer Bauraum benötigt wird.

Diese Augabe wird daduch gelöst, dass der Filter in zwei Teile aufgeteilt ist, die jeweils um zueinander parallele, im Bereich der einander abgewandten Enden angeordnete Schwenkachsen zum Freilegen eines Lufdurchlasses voneinander wegschwenkbar sind.

Durch diese Ausbildung wird erreicht, dass die beiden Teile des Filters nur relativ kleine Schwenkbewegungen ausführen müssen, um einen relativ grossen Luftdurchlass freizulegen. Der für das Ausschwenken der beiden Teile benötigte zusätzliche Bauraum hält sich deshalb ebenfalls in relativ kleinen Grenzen, so dass ein grosses Filtervolumen unterbringbar ist. Darüber hinaus sind die Betätigungskräfte zum Verschwenken der beiden Teile des Filters kleiner, da die von dem Zuluftstrom auf die Teile ausgeübten Drehmomente geringer sind. Sowohl beim Zusammenschwenken als auch beim Auseinanderschwenken unterstüzt die Zuluftströmung das Verschwenken von jeweils einem der Teile des Filters.

In vorteilhafter Ausgestaltung der Erfindung ist vorgesehen, dass der Filter in einer Aufweitung des Gehäuses derart angeordnet ist, dass die beiden Teile in der zusammengeschwenkten Stellung in einer etwa um 45° zu dem Zuluftstrom geneigten Ebene liegen und in der voneinander weggeschwenkten Stellung annähernd in Richtung des Zuluftstromes gerichtet sind. Dadurch lässt sich einerseits ein grossflächiger und grossvolumiger Filter unterbringen, während zum anderen die Aufweitung des Gehäuses nur relativ klein dimensioniert werden muss, um das voneinander Wegschwenken zu ermöglichen. Dabei ist es zweckmässig, wenn der in der zusammengeschwenkten Stellung näher an dem Lufteintritt liegende Teil des Filters in Strömungsrichtung des Zuluftstromes wegschwenkbar ist, und der andere Teil des Filters entgegen der Strömungsrichtung des Zuluftstroms wegschwenkbar ist. Der für das Wegschwenken zusätzlich benötigte Bauraum besteht dann in relativ geringfügigen Ausbuchtungen des Gehäuses.

Um die beiden Teile des Filters in der geschlosenen Stellung dicht aneinanderfügen zu können, wird in zweckmässiger Ausgestaltung der Erfindung vorgesehen, dass eine Teilungsfuge zwischen den Teilen des Filters etwa in einer tangentialen Richtung zu den beiden Schwenkachsen der Teile verläuft.

In der Praxis werden Filter eingesetzt, die aus hintereinander angeordneten Filtermatten gebildet sind, wobei die dem Zuluftstrom zugewandte Filtermatte als ein Schwebstofffilter und die abgewandte Filtermatte als ein Aktivkohlefilter ausgebildet sind. In zweckmässiger Ausgestaltung wird deshalb vorgesehen, dass der Filter wenigstens zwei in Strömungsrichtung des Zuluftstroms hintereinander angeordnete Filtermatten enthält, die durch etwa in tangentialer Richtung zu den beiden Schwenkachsen verlaufenden Teilungsfugen geteilt sind. Um einerseits die Teilungsfugen nicht zu eng tolerieren zu müssen und andererseits dennoch das Hindurchströmen von ungefilterter Luft bei geschlossenem Filter sicher zu vermeiden, wird in vorteilhafter Ausgestaltung vorgesehen, dass die Teilungsfungen zwischen den gleichartigen Filtermatten zueinander versetzt sind, und dass zwischen den beiden etwa tangential zu den Schwenkachsen verlaufenden Teilungsfugen eine lotrecht zu den beiden Teilungsfugen gerichtete weitere Teilungsfuge vorgesehen ist.

In weiterer Ausgestaltung der Erfindug ist ein ausserhalb des Gehäuses angeordneter gemeinsamer Verstellantrieb für die beiden Teile des Filters vorgesehen. Dieser Verstellantrieb kann relativ schwach dimensioniert werden, da die Verstellbewegung sowohl bei dem Zusammenschwenken als auch bei dem Auseinanderschwenken nur von jeweils einem Teil des Filters gegen die Strömungsrichtung des Zuluftstroms erfolgen muss.

Weitere Merkmale und Vorteile der Erfindung ergeben sich aus der nachfolgenden Beschreibung der in den Zeichnungen dargestellten Ausführungsform.

Fig. 1 zeigt einen Schnitt durch eine Vorrichtung mit einem erfindungsgemäss ausgestalteten, auseinander schwenkbaren Filter und

Fig. 2 eine Antriebsvorrichtung zum Verschwenken der beiden Teile des Filters nach Fig. 1.

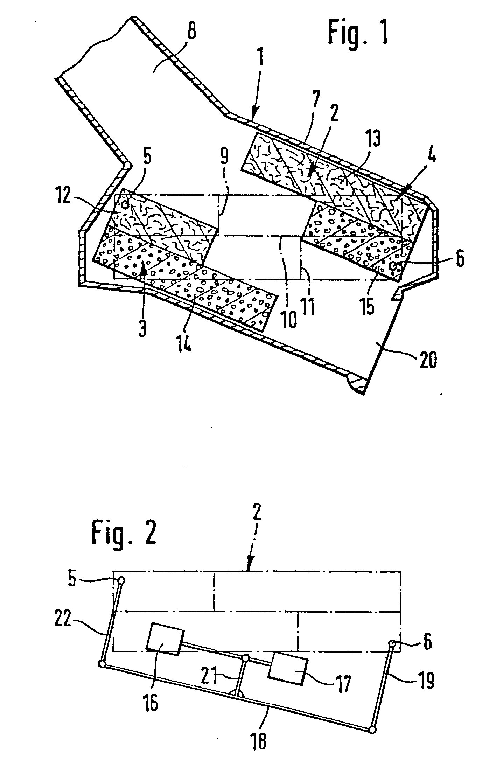

Bei der Ausführungsform nach Fig. 1 ist ein Gehäuse 1 vorgesehen, das einen Lufteintrittsstutzen 8 und einen Luftauslass 20 aufweist. Der Lufteintrittsstutzen 8 ist in nicht näher dargestellter Weise an ein Gebläse angeschlossen, von dem ein Zuluftstrom zugeführt wird, Der Luftaustritt 20 ist in nicht näher dargestellter Weise über Verteileinrichtungen an den Innenraum eines Kraftfahrzeuges oder gegebenenfalls auch an einen Eintritt einer Heizungs- und/oder Klimaanlage angeschlossen.

Das Gehäuse 1 ist mit einer Aufweitung 7 versehen, die einen rechteckigen Grundriss aufweist und die unter einem Winkel von etwa 45° zu dem Eintrittsstutzen 8 angeordnet ist. Innerhalb dieser Aufweitung ist ein Filter 2 angeordnet, der daher auch in einer um etwa 45° zu der Richtung der Zuluftströmung geneigten Ebene liegt (gestrichelte Darstellung des Filters 2 in Fig. 1 und 2). Der Filter 2 weist zwei Teile 3 und 4 auf, die ihrerseits jeweils aus zwei Filtermatten 12 und 14 sowie 13 und 15 bestehen. Die dem Lufteintritt zugewandten Filtermatten 12 und 13 sind von gleichartiger Bauweise und dienen als Schwebstoffilter. Die nachfolgenden Filtermatten 14 und 15 sind Aktivkohlefilter. Die jeweils stromaufwärts liegenden Filtermatten 12 und 13 sind durch eine Trennfuge 9 geteilt, die etwa radial zu zwei Schwenkachsen 5 und 6 verläuft, um die jeweils die Teile 3 und 4 verschwenkbar sind. Diese Schwenkachsen 5 und 6 befinden sich jeweils im Bereich der Enden der beiden Teile 3 und 4. Die Schwenkachse 5 des näher am Lufteintrittsstutzen 8 liegenden Teils 3 befindet sich in der dem Lufteintrittsstutzen 8 zugekehrten Ecke. Die dazu parallel verlaufende Schwenkachse 6 des Teils 4 befindet sich in dem dem Luftaustritt 20 zugekehrten Eckbereich des Teils 4. Zwischen den beiden Matten 14 und 15 ist ebenfalls eine annähernd radial zu den Schwenkachsen 5 und 6 verlaufende Teilungsfuge 11 vorgesehen. Die Teilungsfugen 9 und 11 sind zueinander versetzt, so dass ein mittlerer Bereich entsteht, in welchem eine Teilungsfuge 10 zwischen der Filtermatte 13 des Teils 4 und der Filtermatte 14 des Teils 3 vorhanden ist, die lotrecht zu den beiden Teilungsfugen 9 und 11 verläuft.

Wie aus Fig. 1 zu ersehen ist, können die beiden Teile 3 und 4 derart um ihre Achsen 5 und 6 verschwenkt werden, dass eine Trennung in den Teilungsfugen 9, 10 und 11 erfolgt, so dass in diesem Bereich ein Luftdurchlass für das Hindurchtreten ungefilterter Luft geschaffen wird. Dieser Durchlass wird betätigt, wenn grosse Luftmengen dem Fahrzeuginnenraum zugeführt werden sollen. Wie aus Fig. 1 zu ersehen ist, wird dabei der Teil 3 um die Achse 5 in Strömungsrichtung des Zuluftstromes verschwenkt, d.h. von dem Lufteintrittsstutzen 8 hinweg. Der Teil 4 dagegen wird um die Achse 6 gegen die Strömungsrichtung des Zuluftstroms aufgeschwenkt. Da die Schwenkachsen 5 und 6 jeweils in den einander abgewandten Endbereichen der Teile 3 und 4 angeordnet sind, ergibt sich dieses gegensinnige Schwenken durch eine Drehung im gleichen Drehsinn um die Schwenkachsen 5 und 6. Bei dem Wegschwenken bewegen sich die Teile 3 und 4 jeweils in den trichterförmigen Bereich der Aufweitung 7 vor und nach dem Filter 2. Dieser Bauraum ist ohnehin notwendig, um eine gute Durchströmung des geneigt angeordneten Filters 2 zu erhalten. Es ist deshalb für das voneinander Wegschwenken der beiden Teile 3 und 4 nur ein unwesentlich grösserer Bauraum notwendig. Beim Wiederzusammenschwenken der Teile 3 und 4 des Filters 2 wird der Teil 3 gegen die Strömungsrichtung des Zuluftstromes verschwenkt, während der Teil 4 mit der Strömungsrichtung verschwenkt wird. Daraus wird ersichtlich, dass sowohl beim Öffnen des Filters 2 als auch beim Schliessen des Filters 2 jeweils nur ein Teil 3 oder 4 gegen die Strömungsrichtung verschwenkt wird, während die Verschwenkbewegung des anderen Teils von der Strömung des Zuluftstroms unterstützt wird. Dadurch werden nur relativ geringe Betätigungskräfte für das Auf- und Zuschliessen benötigt.

Da darüber hinaus die beiden Teile 3 und 4 jeweils gleichsinnig um ihre Schwenkachsen 5 und 6 verschwenkt werden, kann in einfacher Weise ein gemeinsamer Verstellantrieb vorgesehen werden, wie er in Fig. 2 dargestellt ist. Bei der Ausführungsform nach Fig. 2 sind an die drehfest mit den Teilen 3 und 4 verbundenen Schwenkachsen 5 und 6 Hebel 22 und 19 angelenkt, die durch eine Stange 18 miteinander verbunden sind. Die Stange 18 greift dann über ein starres Zwischenstück 21 an den Verstellantrieb an, der bei der dargestellten Ausführungsform aus zwei Unterdruckdosen 16 und 17 besteht, die jeweils in eine Richtung wirken. In Abwandlung der dargestellten Ausführungsform wird anstelle von zwei Unterdruckdosen nur eine Unterdruckdose verwendet, die gegen eine Rückstellfeder arbeitet. Bei einer anderen Ausführungsform werden elektrische Stellmotore, beispielsweise Schrittmotore verwendet. Es können jedoch auch für jedes der Teile 3 und 4 Einzelantriebe vorgesehen sein, die gleichzeitig angesteuert werden.

Aus der vorstehenden Erläuterung wird ersichtlich, dass es auch selbstverständlich möglich ist, mit einem geeigneten Verstellantrieb die Vorrichtung so auszubilden, dass die beiden Teile 3 und 4 Zwischenstellungen zwischen den dargestellten Endstellungen einnehmen.

**Patentansprüche**

1. Vorrichtung zum Filtern eines Zuluftstromes, insbesondere für ein Kraftfahrzeug, die einen in einem Gehäuse angeordneten, aus dem Zuluftstrom herausschwenkbaren Filter enthält, dadurch gekennzeichnet, dass der Filter (2) in zwei Teile (3, 4) aufgeteilt ist, die jeweils um zueinander parallele, im Bereich der einander abgewandten Enden angeordnete Schwenkachsen (5, 6) zum Freilegen eines Luftdurchlasses voneinander wegschwenkbar sind.

2. Vorrichtung nach Anspruch 1, dadurch gekennzeichnet, dass der Filter (2) in eine Aufweitung (7) des Gehäuses (1) derart angeordnet ist, dass die beiden Teile (3, 4) in der zusammengeschwenkten Stellung in einer etwa um 45° zu dem Zuluftstrom geneigten Ebene liegen und in der voneinander weggeschwenkten Stellung annähernd in Richtung des Zuluftstromes gerichtet sind.

3. Vorrichtung nach Anspruch 1 oder 2, dadurch gekennzeichnet, dass der in der zusammengeschwenkten Stellung näher an dem Lufteintritt (8) liegende Teil (3) des Filters (2) in Strömungsrichtung des Zuluftstromes wegschwenkbar ist, und dass der andere Teil (4) des Filters (2) entgegen der Strömungsrichtung des Zuluftstroms wegschwenkbar ist.

4. Vorrichtung nach einem der Ansprüche 1 bis 3, dadurch gekennzeichnet, dass eine Teilungsfuge (9, 11) zwischen den Teilen (3, 4) des Filters (2) etwa in einer tangentialen Richtung zu den beiden Schwenkachsen (5, 6) der Teile (3, 4) verläuft.

5. Vorrichtung nach einem der Ansprüche 1 bis 4, dadurch gekennzeichnet, dass der Filter (2), wenigstens zwei, in Strömungsrichtung des Zuluftstroms hintereinander angeordnete Filtermatten (12, 13; 14, 15) enthält, die durch etwa in tangentialer Richtung zu den beiden Schwenkachsen (5, 6) verlaufende Teilungsfugen (9, 11) geteilt sind.

6. Vorrichtung nach Anspruch 5, dadurch gekennzeichnet, dass die Teilungsfugen (9, 11) zwischen den gleichartigen Filtermatten (12, 13, 14, 15) zueinander versetzt sind, und das zwischen den beiden etwa tangential zu den Schwenkachsen (5, 6) verlaufenden Teilungsfugen (9, 11) eine lotrecht zu den beiden Teilungsfugen (9, 11) gerichtete weitere Teilungsfuge (10) vorgesehen ist.

7. Vorrichtung nach Anspruch 5 oder 6, dadurch gekennzeichet, dass die in Strömungsrichtung des Zuluftstroms vorderen Filtermatten (12, 13) etwa mittig zwischen den Schwenkachsen (5, 6) geteilt sind.

8. Vorrichtung nach einem der Ansprüche 1 bis 7, dadurch gekennzeichnet, dass ein ausserhalb des Gehäuses (1) angeordneter, gemeinsamer Verstellantrieb (16, 17, 18) für die beiden Teile (3, 4) des Filters (2) vorgesehen ist.

## Claims

1. Device for filtering feed air, particularly for a motor vehicle, which contains a filter disposed in a housing, which can be swivelled out of the flow of feed air, characterised in that the filter (2) is divided into two parts (3, 4) which in each case can be swivelled away from each other about swivel axes (5, 6) which are parallel to each other and arranged in the area of the ends facing away from each other, for exposing a through flow of air.

2. Device according to claim 1, characterised in that the filter (2) is arranged in an expanded part (7) of the housing (1) in such a way that both parts (3, 4) are located in the swivelled together position in a plane inclined at approximately 45° to the flow of feed air and are directed approximately in the direction of the flow of feed air in the position in which they are swivelled away from each other.

3. Device according to claim 1 or 2, characterised in that the part (3) of the filter (2) located nearer to the air inlet (8) in the position in which they are swivelled together, can be swivelled away in the direction of flow of the flow of feed air and in that the other part (4) of filter (2) can be swivelled away against the direction of flow of feed air.

4. Device according to one of claims 1 to 3, characterised in that a dividing joint (9, 11) runs between the parts (3, 4) of the filter (2) approximately in a tangetial direction to the two swivel axes (5, 6) of the parts (3, 4).

5. Device according to one of claims 1 to 4, characterised in that the filter (2) contains at least two filter mats (12, 13; 14, 15) arranged one behind to the other in the direction of flow of the flow of feed air, which are divided by dividing joints (9, 11), which run substantially in a tangential direction in relation to the two swivel axes (5, 6).

6. Device according to claim 5 characterised in that dividing joints (9, 11) are displaced in relation to each other between the filter mats of the same type (12, 13; 14, 15) and in that another dividing joint (10) which is directed so that it is perpendicular to the two dividing joints (9, 11) is provided between the two dividing joints (9, 11) which run approximately tangentially to the swivel axes (5, 6).

7. Device according to claim 5 or 6, characterised in that the front filter mats (12, 13) in the direction of flow of the flow of feed air are divided approximately centrally between the swivel axes (5, 6).

8. Device according to one of claims 1 to 7, characterised in that a common adjusting drive (16, 17, 18) for the two parts (3, 4) of the filter (2) is provided, which is arranged outside the housing (1).

## Revendications

1. Dispositif pour filtrer un courant d'air d'alimentation, notamment pour un véhicule automobile, qui contient un filtre disposé dans un boîtier et pouvant être dégagé par pivotement hors du courant d'air d'alimentation, caractérisé en ce que le filtre (2) est subdivisé en deux parties (3, 4) qui peuvent être écartées l'une de l'autre par pivotement respectivement autour d'axes de pivotement (5, 6) parallèles entre eux et situés au voisinage des extrémités situées à l'opposé l'une de l'autre, de manière à libérer un passage pour l'air.

2. Dispositif selon la revendication 1, caractérisé en ce que le filtre (2) est disposé dans une partie élargie (7) du boîtier (1) de telle sorte que, dans la position où elles sont réunies par pivotement, les deux parties (3, 4) sont situées dans un plan incliné approximativement de 45° par rapport au courant d'air d'alimentation et sont orientées approximativement dans la direction du courant d'air d'alimentation, lorsqu'elles se trouvent dans leur position écartée réciproquement par pivotement.

3. Dispositif selon la revendication 1 ou 2, caractérisé en ce que la partie (3) du filtre (2), qui lorsque les parties du filtre sont à l'état réuni par pivotement, est la plus proche de l'entrée (8) pour l'air, peut être écartée par pivotement dans le sens d'écoulement du courant d'air d'alimentation et que l'autre partie (4) du filtre (2) peut être écartée par pivotement à l'encontre du sens d'écoulement du courant d'air d'alimentation.

4. Dispositif selon l'une des revendications 1 à 3, caractérisé en ce qu'un joint de séparation (9, 11), disposé entre les parties (3, 4) du filtre (2), s'étend approximativement dans une direction tangentielle par rapport aux deux axes de pivotement (5, 6) des parties (3, 4).

5. Dispositif selon l'une des revendications 1 à 4, caractérisé en ce que le filtre (2) contient au moins deux filtrants (12, 13; 14, 15) disposés l'un derrière l'autre dans le sens d'écoulement du courant d'air d'alimentation et séparés par des joints de séparation (9, 11) s'étendant approximativement dans une direction tangentielle par rapport aux deux axes de pivotement (5, 6).

6. Dispositif selon la revendication 5, caractérisé en ce que les joints de séparation (9, 11) sont décalés l'un par rapport à l'autre entre les mats filtrants identiques (12, 13; 14, 15), et qu'entre les deux joints de séparation (9, 11) qui s'étendent approximativement tangentiallement par rapport aux axes de pivotement (5, 6) il est prévu un joint de séparation supplémentaire (10) perpendiculaire aux deux joints de séparation (9, 11).

7. Dispositif selon la revendication 5 ou 6, caractérisé en ce que les mats filtrants (12, 13), qui sont situés en amont dans le sens d'écoulement du courant d'air d'alimentation, sont subdivisés approximativement dans leur zone médiane entre les axes des pivotement (5, 6).

8. Dispositif selon l'une des revendications 1 à 5, caractérisé en ce qu'il est prévu un dispositif d'entraînement commun (16, 17, 18) situé à l'extérieur du boîtier (1), pour les deux parties (3, 4) du filtre (2).

Fig. 1

Fig. 2